# EUROPEAN PATENT SPECIFICATION

(11) **EP 3 142 085 B1**
(45) Date of publication and mention of the grant of the patent: **02.03.2022**
(21) Application number: 16186418.6
(22) Date of filing: 30.08.2016
(51) Int. Cl.: G07F 11/16, G07F 11/38, G07F 17/10, G06Q 10/08, G07F 17/12, G06Q 30/06, G07F 11/00, B65G 1/04

(54) **PARCEL TERMINAL AND A METHOD FOR OPTIMIZING A CAPACITY OF PACKAGES IN SAID TERMINAL**
PAKETTERMINAL UND VERFAHREN ZUR OPTIMIERUNG DER PAKETKAPAZITÄT IM PAKETTERMINAL
TERMINAL DE COLIS ET PROCÉDÉ D'OPTIMISATION DE LA CAPACITÉ EN COLIS DANS LEDIT TERMINAL

(30) Priority: 12.09.2015 US 201562217864 P; 14.09.2015 EP 15185146
(43) Date of publication of application: 15.03.2017
(60) Divisional application: 22151096.9
(73) Proprietor: Cleveron AS, 71020 Viljandi (EE)
(72) Inventor: LÕSSOV, Remi, 71012 Viljandi (EE); HIRVESAAR, Lauri, 10320 Tallinn (EE); NOORKÕIV, Mikk, 70404 jaska village, Viljandimaa (EE); ROHT, Mart, 71012 Viljandi (EE)
(74) Representative: Berggren Oy

(56) References cited:
- EP-A1- 1 273 531
- EP-A2- 1 462 392
- WO-A1-95/30132
- DE-A1-102006 034 757
- US-A- 5 143 193
- US-A- 6 006 946
- US-A1- 2002 007 281
- US-A1- 2007 237 356
- US-A1- 2008 128 444
- US-A1- 2008 231 152
- US-A1- 2014 224 826
- US-A1- 2015 158 679
- US-B1- 9 120 624

## Description

### FIELD OF THE INVENTION

The present invention relates to a parcel terminal and a method for optimizing parcel capacity in a parcel terminal.

### PRIOR ART OF THE INVENTION

Several different automated devices and terminals for postal objects are known from the prior art. Parcel terminals with separate lockers or shelf-drawers for each parcel are widely known. Such parcel terminals take up much space, are inefficient for use as the capacity of the parcel terminal remains unused, and upon sending or receiving several parcels it is time-consuming to load and deliver parcels. Various examples of such type of inefficient prior art are briefly described as follows.

Patent application DE102006034757A1 describes apparatus and method for automated loading and unloading of goods, wherein the aim of the invention is an inexpensive device and method for automated storage and retrieval of objects show, without being tied to a fixed, predetermined-division. Specifically, the apparatus for loading and unloading of articles having different sizes and / or with different shapes to be suitable.

Patent application US2008/128444A1 describes storage dispenser, wherein the objective of this invention is to propose a storage machine suitable for depositing and retrieving objects for people in general, which is easy and convenient to operate on the basis of automated procedures but which nevertheless ensures a high degree of personal safety with regard to injury due to the automation features. This means that a storage machine may is designed so that it offers both personal safety and in particular secure access. A storage machine proposed by the invention specifically offers high personal safety and access security with virtually no compromises, even though these properties conflict with one another to a certain extent.

Patent application US2007/237356A1 describes parcel imaging system and method of identifying parcels and to establish dimensions of parcels as they are processed at shipping/sorting installations. The further object of this invention is to provide such a system and method which can be used to detect and/or prevent fraud.

Patent application EP1462392A2 describes drive device for a storage device for bearing devices with which, with a simple construction, a high positioning accuracy and a maintenance period are achieved.

Patent application WO95/30132A1 describes system for mailing and collecting items, which can accept and store items for subsequent pick-up by a commercial carrier, which is inexpensive to deploy and maintain at a fixed location, which can accept letters and packages of different shapes and sizes, and size and weigh shipments prior to acceptance.

Patent application US2015/158679A1 describes self-service parcel terminal to fasten the loading, storing and delivering parcels, and to make the storage of parcels easier, increase the capacity of the terminal, guarantee the security of parcels and that each person receives their specific parcel, as well as to increase the user-friendliness of the terminal.

Patent application EP1273531A1 describes a storage system being capable of receiving and delivering items from/to a user in an automatic manner, wherein the items may be stored in such a way that the space available is utilized in an optimal manner while ensuring that sufficient space is allocated to each item.

Patent application US 2014/0224826 A1 discloses an automatic catering machine and a method of operating it. The machine comprises a rack store for storing items of food and a transportation apparatus for removing the items of food.

Patent publication US 9120624 B1 discloses a package drop-off and pick-up system. The apparatus comprises rotatable racks holding a plurality of storage compartments.

Patent publication US 6006946 A discloses a pill dispensing system. The pill dispensing system comprises a semi-circular shelving unit, from which a robot arm retrieves pills.

Patent application US 2008/0231152 A1 discloses an automated substance storage that is configured to store objects in a controlled temperature.

Patent publication US 5143193 A discloses an automated library article terminal. The terminal comprises an article handling member mounted on a vertical lift member to engage and release articles.

The known solution closest to the present invention is the tower-like stationary parcel terminal described in the European patent EP 1358117 B1 (FRAUNHOFER GES FORSCHUNG) 05.11.2003 where shelves with drawers for storing parcel containers have been placed around a transportation mechanism fastened on a circular base. The drawback of such a solution is its ineffective usage of space as the drawers of specific fixed sizes leave some of the space on the shelf unused while storing goods on the shelves.

### BRIEF DESCRIPTION OF THE INVENTION

The aim of the present invention is to offer a more effective and faster device and method of sending and receiving parcels compared to the solutions known from prior art. In order to achieve the objective, the present invention accommodates as many parcels as possible, onto the smallest area possible, into heights, while guaranteeing the fast and effective sending as well as receiving of the parcels.

The objects of the present invention are achieved by the parcel terminal defined in claim 1 and by the method for optimizing parcel capacity in a parcel terminal as defined in claim 4.

Differently from the already known solutions where parcel terminals have separate lockers or shelf-drawers for each parcel most of space in the lockers of parcel or shelf-drawers remains unused, and sending as well as receiving parcels is time-consuming, the present invention stores each parcel in the way that the parcel to be stored would take up space according to its size only. In order to achieve such a solution, a tower-shaped parcel terminal with one loading and delivery opening has been built, with the multitude of shelves for storing parcels placed in a circular fashion around the upright parcel transportation boom.

In order to store parcels in the parcel terminal efficiently and fast, the parcels loaded in the parcel terminal are measured and weighed automatically, and the measurement details of each parcel are connected to their identification codes generated for single use.

The one opening for loading and delivering parcels also guarantees stable temperature in the parcel terminal as the change of air in the parcel terminal only takes place while loading or delivering parcels. The stable temperature inside the parcel terminal makes it possible to use the parcel terminal indoors and outdoors all the year round.

The user identifies themselves with a unique code generated earlier with a smart device or web application, preferably a QR-code (in alternative solutions, for example, a bar code, a combination of numbers/letters, etc.). The code includes data about the user, whether the user is a courier who wishes to send or receive parcels, or some other user wishing to send or receive a parcel.

A QR-code, a bar code or some other type of a single-use universal code is generated for the user in one case according to the user's data and in another case according to the data of the loaded parcel. QR-code is the preferable option in the present solution as it allows remarkable more information to be included in one code, and which is, at the same time, also a universal code read by all 2D scanners. Alternative solutions of the present invention make use of bar codes or other codes. If courier is the user, then in order to register couriers in the server - who visited which parcel terminal and when - they are each assigned an ID number that is
added every time to each newly generated user code. Upon generating a parcel code, the data are sent to the server after loading the parcel in the parcel terminal.

In order to store parcels as tightly as possible, the distances between rails of the shelves have been made smaller than the height of the parcel container being placed onto the shelf between the rails. The main boom loader is moved up and down, and the boom together with the loader turns preferably 315 degrees both ways. Loading the parcel container onto the loader takes place, for example with the help of a magnetic or mechanical mechanism. A magnetic plate has been attached to the boom and loader side of the parcel container. The magnetic mechanism of the loader is guided against the magnetic plate of the parcel container and is thus used to pull the parcel container on the loader.

An empty parcel container is brought to the console; a parcel is loaded on the parcel container through the console door opening. The height of the parcel is measured, the parcel is weighed and taken onto the shelf that has suitable vacant space, and is placed as close to the topmost parcel shelf as possible. When a moment comes when the parcel terminal is not in active use, the parcel containers are rearranged automatically with the main boom and loader according to the heights of the parcels on them, thus creating more vacant space for optimal use of the space inside the parcel terminal.

The code generated for parcel terminal users is a key meant for single use which connects the user, the parcel and parcel data. According to the data contained in the code, the parcel is delivered to the user upon scanning the code and touch-free; i.e. the user does not have to touch the parcel terminal to start the transaction upon reaching the parcel terminal, they receive their parcel touch-free. If the generated code contains information about several parcels, the parcel terminal delivers them to the user one at a time one after another. The code is generated by the user prior to sending the parcel in a smart device application or in a web application. The code for the parcel recipient is generated and forwarded automatically by the server as soon as the parcel terminal has sent the data concerning the loaded parcel to the server.

The user enters, in the user interface of the parcel terminal, the choice if they wish to load or receive a parcel or parcels. The main boom with the loader moves to the console and the console door opens. A parcel container is pushed in front of the user with the loader for loading or receiving a parcel. When, upon sending a parcel, the parcel in question does not have a previously added code, the pre-printed sticker (label) with a code including parcel data is added to the parcel by the user or, alternatively, the printer in the parcel terminal console prints a sticker (label) with a code including parcel data that is added to the parcel by the user.

The user then scans the code on the parcel that contains parcel data, and places the parcel in the parcel container in the console. Based on the scanned data it is identified that a parcel is going to be loaded and an empty parcel container is brought to the console for loading the parcel.

Next automatic identification is carried out inside the parcel terminal: if the parcel has been placed properly on the parcel container and if the parcel exceeds the width and length limits. The identification of the parcel on the parcel container is carried out by taking a picture of the parcel with the camera inside the console. The identification of the width and length of the parcel is carried out by reflective markers and two cameras or, in an alternative solution by sensors, or by sensors and mirrors. The obtained data is processed by relevant software.

Upon loading a parcel exceeding the set measures, the user interface announces the oversized parcel to the person who loaded it by showing, on the screen of the user interface, the picture where the parcel goes over the reflective markers, and the person loading the parcel must then adjust the position of the parcel or, in the case of a bigger parcel, when it does not fit within the reflective markers, the parcel must be taken out, and repack if necessary. This system guarantees that the loose parts of the parcel would not be caught between the main boom or loader mechanisms while transporting from the console to the shelf, and would not hinder the working process of parcel terminal.

As an alternative for identifying an oversized parcel there are measuring sensors installed into every corner of the parcel container that identify the oversized parcel when the parcel cuts the ray from the measuring sensor. Another alternative solution uses, instead of two measuring sensors, mirrors placed at a specific relevant angle sending the ray from one measuring sensor to another.

Taking pictures enables, in addition to measuring, to identify the condition of the parcels when they are loaded in and delivered from the parcel terminal.

Next, the height of the parcel placed on the parcel container is measured in the terminal. The height of the parcel determines that a suitable place is found for it on the shelf where it will be stored. This suitable place for a parcel is found on the shelf this way that the heights of the vacant spaces on the shelves and the number of rails in them per one vacant spatial unit are compared to the height of the parcel placed in the parcel container. The parcel container with the parcel base is placed into such a space on the shelf - preferably underneath an upper parcel container - where the relevant capacity of the space would be used to the maximum.

Upon loading and receiving parcels, the existence of the user at the console is recognized by a motion sensor. The console door is opened at the height of the screen and scanner is activated. The user identifies themselves with a previously generated unique single-use code, preferably scanning a QR-code (in alternative solutions, for example, a bar code, a combination of numbers/letters, etc.).

While approaching the parcel terminal, the sensor identifies a user at the parcel terminal and the console door is opened to reveal the user interface and the scanner is activated. The user scans the code containing their parcel data. The parcel terminal identifies from the code the transaction where the parcel must be delivered and brings, with the boom and loader, to the console the parcel meant for the user. The door is fully opened and the user can take their parcel out. After delivering the parcel the door closes.

### BRIEF DESCRIPTION OF THE DRAWINGS

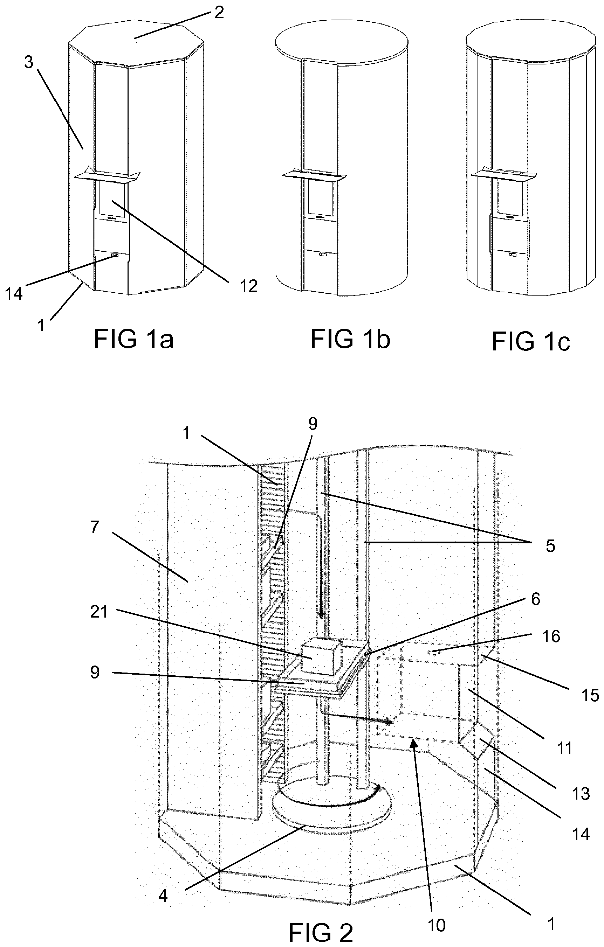

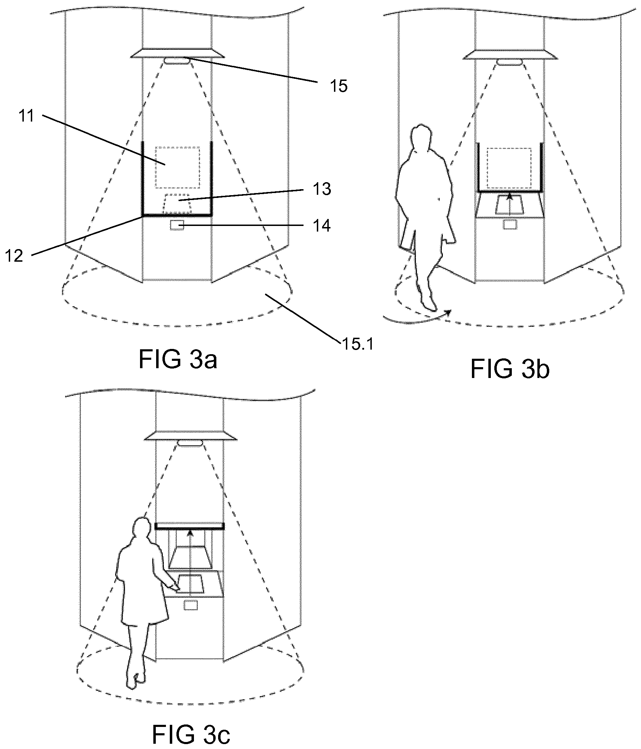

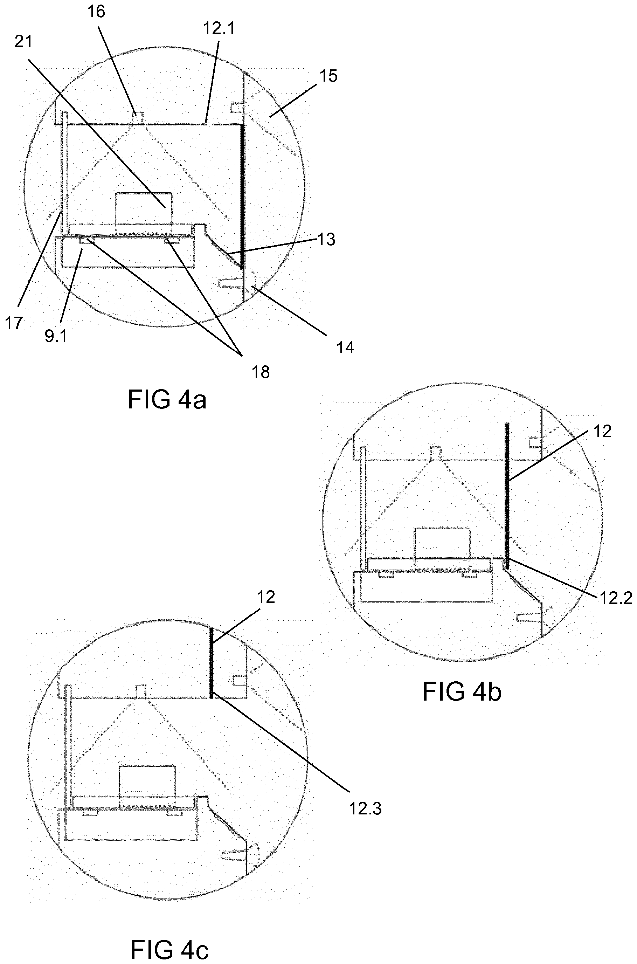

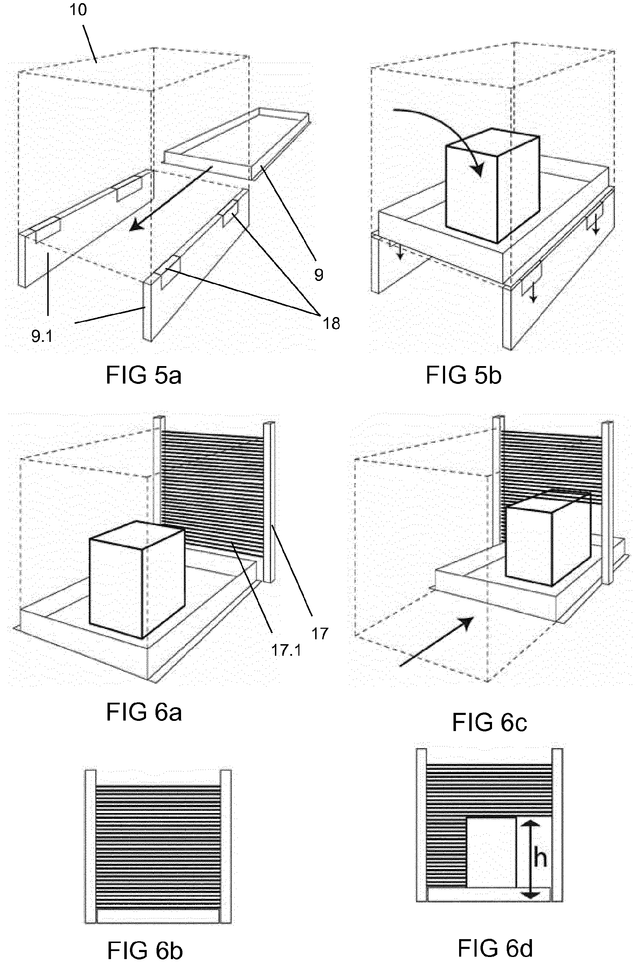

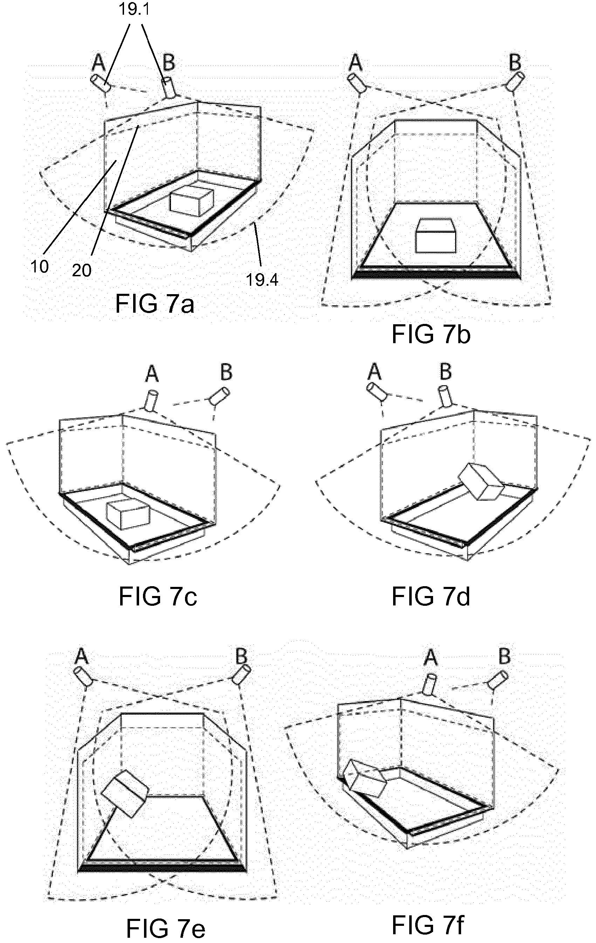

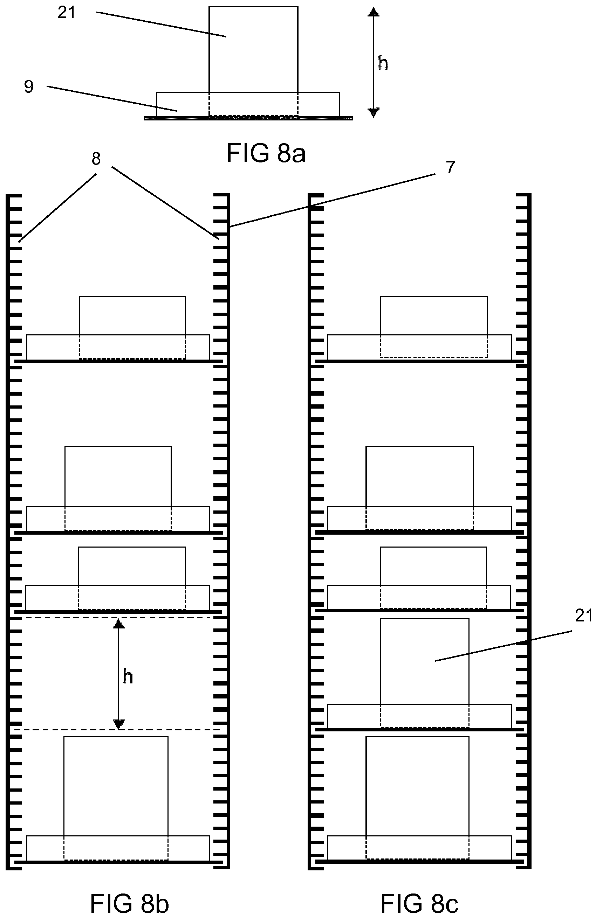

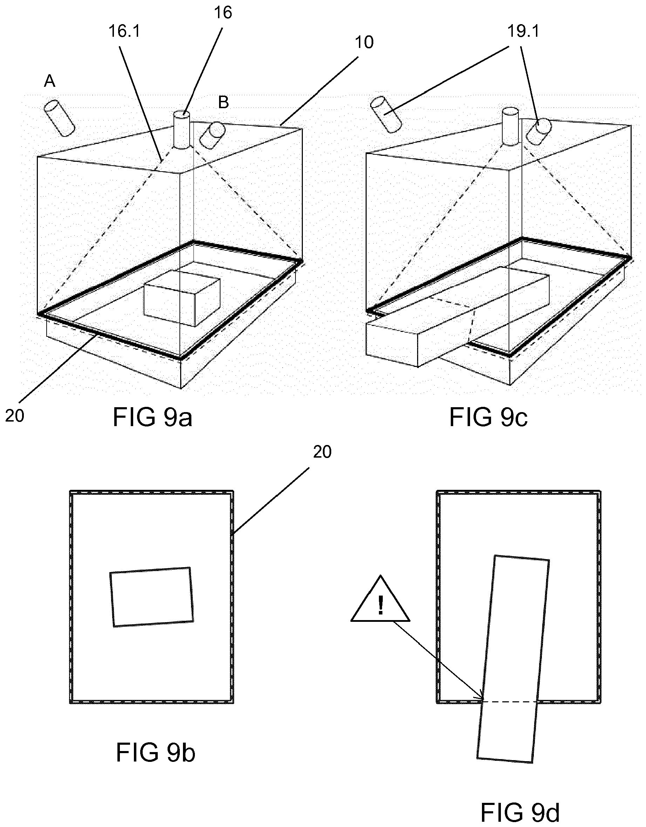

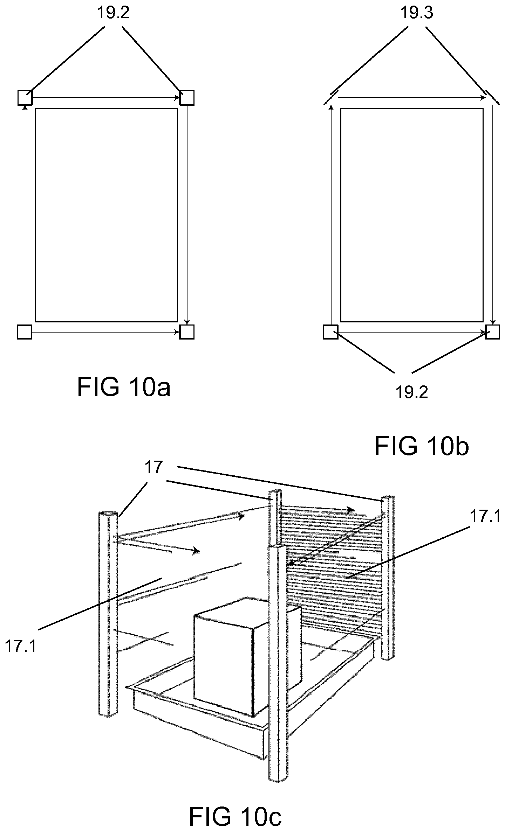

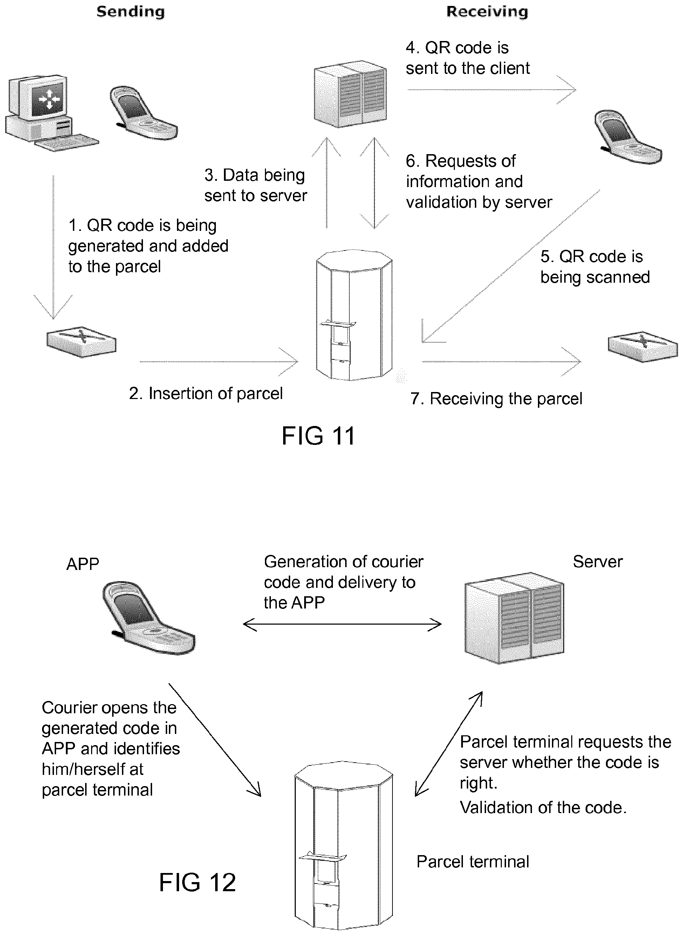

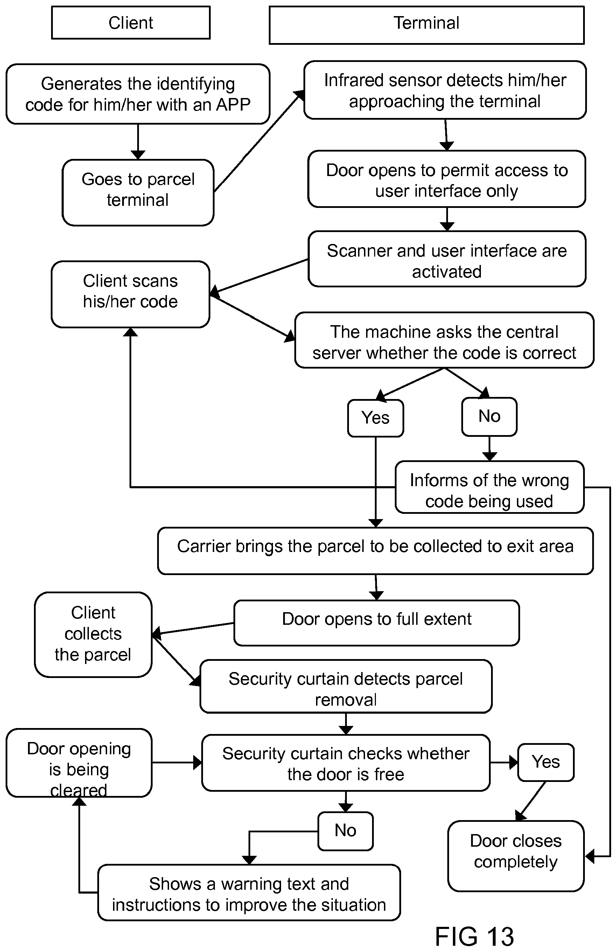

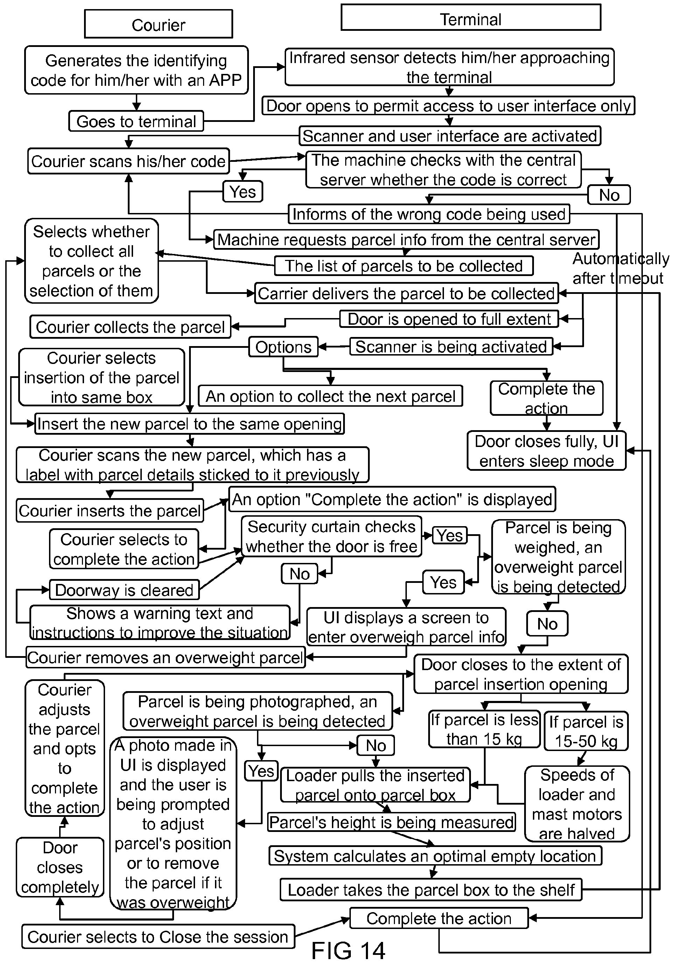

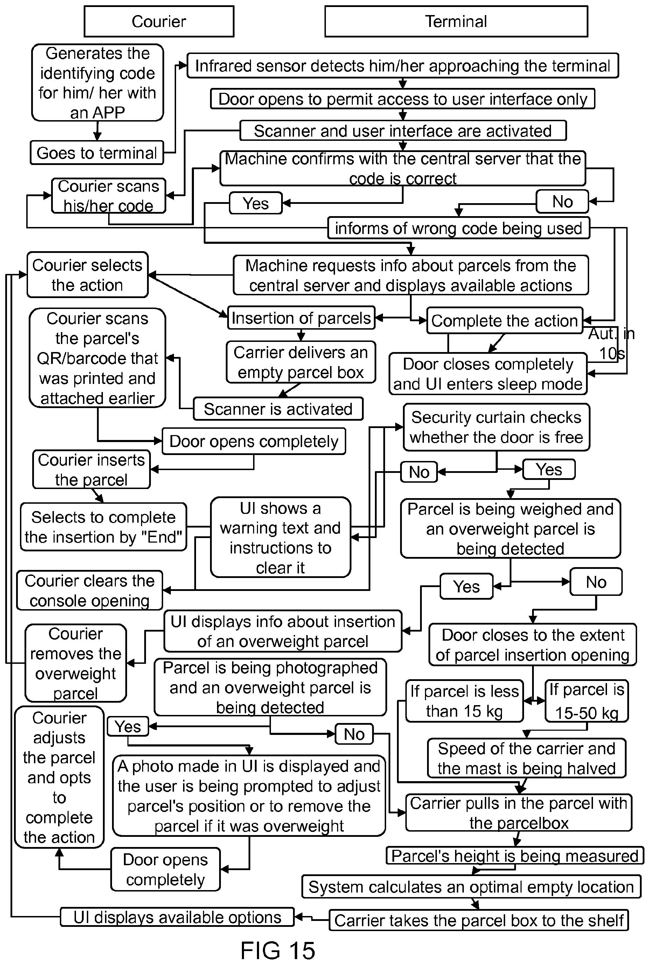

The present invention is explained more precisely with references to figures added, where in
figures fig 1a to 1c are shown different sample solutions for the body of the parcel terminal in accordance with the present invention;
figure fig 2 is shown the diagram of the working principle of the parcel terminal in accordance with the present invention;
figures fig 3a to 3c are shown the identification of the presence of a parcel terminal user;
figures fig 4a to 4c are shown the cross section of a parcel terminal console in different console door positions;
figures fig 5a and 5b are shown the parcel weighing system in the parcel terminal console;
figures fig 6a to 6d are shown parcel height measuring in the console;
figures fig 7a to 7f are shown parcel position and width oversize recognition system in the console;
figures fig 8a to 8c are shown the optimal accommodating of parcels in the parcel terminal;
figures fig 9a to 9d are shown recognizing an oversized or improperly placed parcel and displaying the picture for the user;
figures fig 10a to 10c are shown the parcel position, oversized width and length recognition system in the console in an alternative solution;
figure fig 11 is shown a general diagram of the method in accordance with the present invention;
figure fig 12 is shown the user code generating process in accordance with the method of the present invention;
figures fig 13 to fig 17 are shown the stages of the method in accordance with the present invention where different users load and receive parcels.

### DETAILED DESCRIPTION OF THE INVENTION

The figures fig 1a to 1c show different alternative parcel terminal body solutions in accordance with the present invention, in the cases of an octagonal, cylindrical and hexadecagonal housing.

The figure fig 2 shows that the tower-shaped body of the portable parcel terminal in accordance with the present invention comprises a base frame 1, roof frame 2 and side panels 3 and contains a main boom 5 with a loader 6, fastened to the rotating base 4 that has been added to the base frame; circular set-up of multitude of shelves 7 with rails 8 around the rotating base, removable parcel containers 9 that are placed on the shelf rails 8 and allow rearrangement on rails, console 10.

The console 10 comprises of a parcel container base 9.1 added to the lower part of the console, a console opening 11, a console door 12, a user interface 13, a scanner 14, a motion sensor 15 attached outside to the wall, a parcel position photographing camera 16 added into the upper part of the console, measuring light curtains 17 added to the rear section, weighing elements 18, at least one measuring device, attached into at least one corner, reflective markers 20 added to the inside walls of the console, whereas in alternative embodiments the measuring device is one or more measuring cameras 19.1, measuring sensors 19.2 or mirrors 19.3..

The parcel terminal is connected to a server in order to process data, generate user and parcel codes and for identifying users with the web application or smart device application, as well as sending data to the parcel terminal.

While scanning the parcel code with the scanner 14, the boom 5 and the loader 6 bring the parcel container 9 from the rails 8 of the shelf 7 with a parcel 21 in it, and take it to the console front 10 and the terminal opens the door 11. The main boom 5 moves the loader 6 to left and right according to the predetermined degrees, for example up to 315 degrees both ways in the preferred solution. That guarantees, in the most optimal way, fast and efficient retrieval of parcels from the shelves, and placing parcels onto the shelves.

The method according to the present invention, in order to optimize the capacity to accommodate parcels in the parcel terminal, covers the following stages:
- Generation of the user code and parcel code, which are in the format of a QR-code in the preferred solution, a bar code or some other type of unique single-use code in alternative solutions.
- Initiation of the session of loading and/or delivery of the parcel. In order to initiate a session, user identification is carried out at the parcel terminal. The motion sensor 15 mounted on the panel of the parcel terminal is used to identify the user. It identifies the user as soon as the user has moved into the motion sensor's coverage area 15.1. Figure 4a shows the parcel terminal door 12 in closed position 12.1.
- Opening of the parcel terminal console door 12 to reveal the user interface 13, wherein the position 12.2 of door 12 is shown in fig 4b.
- Activation of the scanner 14 and user interface 13.
- Upon scanning the code by the user, the person is identified and the scanned code is sent to the server.
- Validation of the scanned code.
- Sending the command to load the parcel 21 or to deliver the parcel 21.
- Full opening of the console door 12, wherein the position 12.3 of the door 12 in shown in figure 4c.
- Performing the parcel loading or delivery transactions. Upon loading the parcel, the availability and location of a vacant space in the parcel terminal is checked, the parcel 21 that was placed in the parcel container 9 is measured, parcel's position in the parcel container is specified, the parcel is weighed and, according to the received data, the most suitable place for the parcel is found on the shelf 7. Upon measuring the parcel, parcel's height is measured. In the case when the height h of the parcel 21 corresponds to no vacant spaces in the parcel terminal, the parcel containers in the parcel terminal are rearranged on the rails 8 of the shelves 7 in a way that a vacant space corresponding to the height h of the parcel could be made on a shelf 7.
- Completion of the parcel loading or delivery session, the door will be closed fully and the scanner as well as the user interface are deactivated.

The figure fig 11 shows a general diagram of the method in accordance with the present invention and figure fig 12 shows the user code generating process in accordance with the method of the present invention.

Figures fig 3a to 3c show the identification of the presence of a parcel terminal user with a motion sensor 15 which forwards the information about the instance when a user moves into the coverage area 15.1 of the motion sensor 15. When the user moves into the motions sensor's coverage area 15.1, the console door 12 is opened to reveal the user interface 13. Opening the door activates the scanner 14 and the user code is scanned. If the code is for delivering a parcel, the corresponding parcel will be brought, with the main boom 5 and loader 6, to the console 10 and the console 10 door 12 will open fully. The parcel 21 is delivered and the door 12 is brought to its closed position.

The console 10 diagram of the parcel terminal and the different positions of the console door are shown in figures fig 4a to 4c, whereas in figure fig 4a the console door 12 is in closed position, in figure fig 4b the door 12 is open partially to reveal the user interface 13 and has partially moved through the slot 12.1 in the upper part of the console and in figure fig 4c the console door 12 is in its fully open position, having been guided through the door moving slot 12.1.

In figures fig 5a and fig 5b are shown the parcel 21 weighing process in the console 10. Upon placing the parcel 21 into the parcel container 9, weighing is carried out to determine the movement speed for the main boom 5 and loader 6. In the case where the weight of the parcel 21 exceeds the assigned weight (for example over 15 kg), a slower speed will be determined for the boom 5 and loader 6 to guarantee that the parcel 21 remains in the parcel container 9. In order to weigh the parcel 21, weighing elements 18 have been added to the base 9.1 of the parcel container 9 in the lower part of the console 10. Upon placing the parcel container 9 onto the weighing elements 18 by the loader 6, the weight is zero. After loading the parcel 21, the parcel 21 is weighed and the data sent to the user interface, and the movement speed for the main boom 5 and loader 6 is determined according to the weight of the parcel 21.

The upper camera 16 of the console has been added to photograph the state and position of the parcel in order to show the user how the parcel is positioned in the parcel container, and how the parcel must be adjusted if the parcel goes, at some places, over the borders set with reflective marker-lines 20, and in order to identify what parcel was placed in the parcel container 9 and how; and how the parcel was delivered in the case when something happened to the parcel meanwhile. In the case when the parcel has been placed in the parcel container inappropriately, the user interface 13 displays for the user a picture taken of the position of the parcel together with a warning sign and instructions how to adjust the position of the parcel. The picture of the parcel photographed is displayed in the user interface 13 together with its weight and measuring data.

Next, the height of the parcel placed in the parcel container is measured in the parcel terminal, which is shown in figures fig 6a to fig 6b. Measuring the height of the parcel is performed upon placing the parcel 21 in the parcel container 9 in the console 10. After the confirmation that a parcel has been placed in the console, the console door 12 closes and the parcel container 9 is pulled, with a magnetic mechanism or a mechanical mechanism, for example, onto the loader 6 through measuring light curtains 17 and the parcel 21 placed in the parcel container cuts the measuring rays at the height of h. Each measuring ray 17.1 has a defined height value h and as a result the height of the parcel 21 is calculated. According to the height of the parcel, a place on the shelves is calculated, and it is specified where the parcel of such height would fit the best - after measuring the parcel, the system calculates the most optimal space on the shelves.

While measuring the height of the parcel, the data are analyzed and a vacant space where the parcel will be located is calculated. During this time the parcel is transported to a vacant area and placed on the shelf 7 to the respective rails 8 that are shown in figures fig 8a to fig 8c. The height of the rails has been set according to the principle that they have been installed at shorter distances than the height of the parcel container.

Measuring light curtains send information to the computer where the calculation of vacant spaces on the shelves in the parcel terminal is performed, as well as the comparison with the height of the parcel. Each shelf is checked for the capacity to accommodate the parcel. If, for example, the parcel is four rail-spans high and the shelf has vacant rails 1-10, then the rails 7-10 are eliminated because that parcel will not fit in there and the parcel is not placed on the rails 1-6 because this is not the most optimal space. In such a case the shelf and location with the best-fitting vacant space from among the rest of the vacant rails on shelves is calculated in order to place the parcel there.

In figures fig 9a to 9d are shown the display picture of an oversized and inappropriately placed parcel for the user. The figure fig 9a shows a parcel 21 that has been placed properly in the parcel terminal 9, and the respective picture to be displayed for the user in the user interface is shown in figure fig 9b. The figure fig 9c shows a parcel in the parcel container, bigger than the allowed limits and improperly placed; and its respective picture displayed in the user interface is shown in figure fig 9d.

In an alternative embodiment the oversized parcel is identified by two cameras. A parcel is placed in the parcel container 9. The person wanting to load the parcel selects the command in the user interface 13 and then the cameras 19.1 (A and B) take a picture. In the case when the parcel 21 is oversized or inappropriately placed in the parcel container 9, the reflective markers 20 get cut by the parcel. The system checks the cut reflective marker lines 20 and when this has occurred, the respective information is displayed in the user interface screen so that the user loading the parcel could adjust the parcel 21 or remove it from the parcel container 9.

In figures fig 7d to fig 7f are shown how an oversized or inappropriately placed parcel is cutting the reflective marker line. In figures fig 7a to fig 7c are shown a properly placed parcel.

The console cameras 19.1 (cameras A and B) have been installed into both upper front corners of the console when viewed from in front of the console. It is necessary to use at least two cameras in order to guarantee a sufficient photographing area 19.4 and for checking the borderlines of the reflective markers 20 set on the sides. After taking pictures of the parcel placed in the parcel container with cameras A and B, the pictures are sent to the server where the pictures taken of the parcel are compared with the control picture where a parcel is properly placed.

In different alternative solutions, the inappropriate position or measures of the parcel in the parcel container are determined with, for example, 4 pairs of measuring sensors (for example optical measuring sensors), 2 pairs of measuring sensors (for example optical measuring sensors) or mirrors and two cameras.

Identifying an oversized parcel with the help of measuring sensors 19.2 and/or mirrors 19.3 is shown in figures fig 10a to fig 10c. After placing the parcel 21 into the parcel container 9, if the parcel cuts the rays of measuring sensors 19.2, it is announced to the user in the user interface 13, so that the position of the parcel 21 be adjusted or the parcel removed from the parcel container 9 if it is oversized.

The number of measuring sensors 19.2 has been decreased with the help of mirrors 19.3 in the alternative solution and in such a case the movement of rays from one measuring sensor 19.2 is reflected with the help of mirrors 19.3 to another measuring sensor 19.2.

In order to display the picture of an oversized or inappropriately placed parcel for the user, as shown in figures fig 9a to fig 9d, the parcel 21 is loaded in the parcel container 9. After loading, a picture is taken with a camera 15. If the parcel identification cameras 19.1 (cameras A and B) have identified and oversized or inappropriately placed parcel, a warning is also displayed on the screen specifying the reflective marker line 20 that the parcel 21 is cutting. The user then adjusts the parcel's position in the parcel container or takes the parcel out of the parcel container.

The following explains the solution variations of the method in accordance with the present invention, in the case of different users loading and receiving parcels, which have been shown in figures and flow charts fig 13 to fig 17.

In the alternative embodiment of the method in accordance with the present invention, delivering parcels to the courier has been shown in the flow chart fig 13, comprises following stages.
- Courier generates themselves an identifiable code via an application.
- Motion sensor 15 identifies the courier approaching the parcel terminal which initiates the session.
- Parcel terminal console door 12 is opened to reveal the user interface 13.
- The scanner 14 and user interface 13 are activated.
- Courier scans the previously generated code and the system identifies the person by forwarding the scanned code to the server.
- In the case when the code is wrong, announcement is made about using a wrong code and scanning is carried out again and/or the door closes completely and the session is over and the user interface as well as the scanner are deactivated.
- If the code is correct, an inquiry is sent to the server to obtain information about parcels.
- A list of parcels is issued which is displayed in the user interface. The courier enters a command to receive all the parcels one after another, or a selection is made to retrieve only some parcels.
- The command to deliver a selection of parcels is sent to the system and the boom with the loader bring the parcel or parcels to be delivered, one after another, according to the list, to the console.
- Upon delivering the first parcel, the door opens fully.
- The parcel delivered to the console is taken out by the courier and the command to retrieve the next parcel is entered.
- The system checks if the parcel has been taken out and the door opening is clear.
- The check of the door opening to be clear is performed with safety curtains.
- In the case when it is identified that the door opening is not clear, a warning and instructions to improve the situation are displayed in the user interface. After this recheck is performed to ensure the door opening is clear.
- When the parcel has been taken out and the door opening has been cleared, the door closes to cover the parcel delivery slot and the loader brings the next parcel to be delivered. Then the system checks if the parcel has been taken out and the door opening clear. The check that the door opening is clear is performed with safety curtains. In the case when it is recognized that the door opening is not clear, a warning and instructions to improve the situation are displayed in the user interface. After this recheck is performed to ensure the door opening is clear.
- The process is repeated until the parcels in the list have all been delivered.
- In order to complete the session, an option is displayed in the user interface to finish the session or to start a new one, either for loading parcels or for receiving parcels.
- Upon receiving the command from the courier to finish the session, the door moves to its fully closed position.
- If the command by the courier, to finish the session or to start a new session, is not entered during the allocated time (within 10 seconds, for example), the door moves to its fully closed position and the user interface as well as the scanner are deactivated.

In the alternative embodiment of the method in accordance with the present invention, the process of delivering parcels to the courier and loading parcels by the courier is shown in the flow-chart 14 and comprises following stages:
- Courier generates themselves an identifiable code via an application
- Motion sensor 15 identifies the courier approaching the parcel terminal which initiates the session.
- Parcel terminal console door 12 is opened to reveal the user interface 13.
- The scanner 14 and user interface 13 are activated.
- Courier scans the previously generated code and the system identifies the person by forwarding the scanned code to the server.
- If the code is wrong, announcement is made about using a wrong code and scanning is carried out again and/or the door closes completely and the session is over and the user interface as well as the scanner are deactivated.
- If the code is correct, an inquiry is sent to the server to obtain information about parcels.
- A list of parcels is issued which is displayed in the user interface. The courier enters a command to receive all the parcels one after another, or a selection is made to retrieve only some parcels.
- The command to deliver a selection of parcels is sent to the system and the boom with the loader bring the parcel or parcels to be delivered, one after another, according to the list, to the console.
- Upon delivering the first parcel, the door opens fully.
- The full opening of the door activates the scanner.
- The parcel delivered to the console is taken out by the courier and the command to retrieve the next parcel or to load a new parcel in the same parcel container is entered.
- Upon entering the command to load a new parcel, the scanner is activated.
- In the case of a command to enter a new parcel, data about the parcel are entered and a sticker (label) with a code with the parcel data is printed out and attached onto the parcel.
- The coded parcel is scanned and loaded in the parcel terminal by placing it into the parcel container.
- An option is displayed to complete the transaction.
- The courier selects to finish the transaction.
- The system checks if the parcel has been taken out and the door opening is clear.
- The check of the door opening to be clear is performed with safety curtains. In the case when the system recognizes that the door opening is not clear, a warning and instructions to improve the situation are displayed in the user interface, after which the door opening is cleared.
- When the door opening is clear or cleared, the parcel is weighed and checked if the weight of the parcel remains within the allowed limit. In the case when an oversized parcel is identified, information about the oversized parcel to be removed is displayed in the user interface and then the parcel is removed and a new command to finish the transaction, to load a new parcel, to retrieve a new parcel or to end the session is entered.
- If the parcel is not oversized, the door closes to cover the parcel delivery slot.
- Measuring the parcel is carried out and checking is performed whether the parcel fits within the allowed size limits and has properly been placed in the parcel container.
- Picture is taken of the parcel to measure it and check its position in the parcel container.
- If it is established that the parcel is oversized, the picture taken and instructions to adjust the position of the parcel are displayed in the user interface, or, if the parcel is oversized, the instructions to remove the parcel from the parcel container. In such a case the door will open fully to allow adjustment or removal of the parcel. After the parcel has been adjusted or taken out, and the command to end the transaction has been entered, the door closes to cover the parcel delivery slot. And again, photographing is performed to check for the position of an oversized or inappropriately placed parcel.
- If, upon weighing the parcel, it is established that the parcel meets the weight limits, the parcel container with the parcel placed into it is pulled onto the loader.
- If, upon weighing the parcel, it is established that the parcel is lighter (for example, up to 15 kg) than the set limits, the parcel terminal continues in its normal working mode.
- If, upon weighing the parcel, it is established that the parcel is heavier (e.g., between 15-50 kg) than the set limits, then the movement speed of the loader and main boom is slowed down according to the weight of the parcel in order to avoid upsetting the parcel during the movement of the loader and boom, or to keep it from falling out of the parcel container.
- Upon pulling the parcel onto the loader together with the parcel container, the height of the parcel is measured.
- According to the height of the measured parcel, and according to the positions of other parcels as well as the vacant space on the shelves, the most suitable place is calculated for the parcel to be loaded in order to make sure that the parcel to be loaded would take up as little space as possible.
- The boom transports the parcel that has been pulled onto the loader together with the parcel container, to the shelf according to the most suitable vacant place found previously.
- In order to complete the session, an option is displayed in the user interface to finish the session or to start a new one, either for loading parcels or for delivering parcels.
- Upon receiving the command from the courier to finish the session, the door moves to its fully closed position.
- If the command by the courier, to finish the session or to start a new session, is not entered during the allocated time (within 10 seconds, for example), the door moves to its fully closed position and the user interface is deactivated.

In the alternative embodiment of the method in accordance with the present invention, the process of loading parcels by the courier is shown in the flow-chart 15 and comprises following stages:
- Courier generates themselves an identifiable code via an application
- Motion sensor 15 identifies the courier approaching the parcel terminal which initiates the session.
- Parcel terminal console door 12 is opened to reveal the user interface 13.
- The scanner 14 and user interface 13 are activated.
- Courier scans the previously generated code and the system identifies the person by forwarding the scanned code to the server.
- If the code is wrong, announcement is made about using a wrong code and scanning is carried out again and/or the door closes completely and the session is over and the user interface as well as the scanner are deactivated.
- If the code is correct, an inquiry is sent to the server to obtain information about parcels and options are displayed in the user interface.
- The courier enters a command to load parcels.
- The boom and the loader bring an empty parcel container to the console and scanner is activated.
- Upon entering the command to load a new parcel, the parcel data are entered and a sticker (label) with a code with parcel data is printed out and attached onto the parcel.
- The coded parcel is scanned, the door opens fully and the parcel is loaded into the parcel terminal and placed into the empty parcel container in the console.
- An option to complete the transaction is displayed
- The courier selects to finish parcel loading transaction.
- The system checks if the parcel has been loaded and the door opening is clear.
- Safety curtains check if the door opening is clear. In the case when the system recognizes that the door opening is not clear, a warning and instructions to improve the situation are displayed in the user interface, after which the door opening is cleared.
- When the door opening is clear or cleared, the parcel is weighed and checked if the weight of the parcel remains within the allowed limit. In the case when an oversized parcel is identified, information about the oversized parcel to be removed is displayed in the user interface and then the parcel is removed and a new command to finish the transaction, to load a new parcel, to retrieve a new parcel or to end the session is entered.
- If the parcel is not oversized, the door closes to cover the parcel delivery slot.
- Measuring the parcel is carried out and checking is performed whether the parcel fits within the allowed size limits and has properly been placed in the parcel container.
- Picture is taken of the parcel to measure it and check its position in the parcel container.
- If it is established that the parcel is oversized, the picture taken and instructions to adjust the position of the parcel are displayed in the user interface, or, if the parcel is oversized, the instructions to remove the parcel from the parcel container. In such a case the door will open fully to allow adjustment or removal of the parcel. After the parcel has been adjusted or taken out, and the command to end the transaction has been entered, the door closes to cover the parcel delivery slot. And again, photographing is performed to check for the position of an oversized or inappropriately placed parcel.
- If, upon weighing the parcel, it is established that the parcel meets the weight limits, the parcel container with the parcel placed into it is pulled onto the loader.
- If, upon weighing the parcel, it is established that the parcel is lighter (for example, up to 15 kg) than the set limits, the parcel terminal continues in its normal working mode.
- If, upon weighing the parcel, it is established that the parcel is heavier (e.g., between 15-50 kg) than the set limits, then the movement speed of the loader and main boom is slowed down according to the weight of the parcel in order to avoid upsetting the parcel during the movement of the loader and boom, or to keep it from falling out of the parcel container.
- Upon pulling the parcel onto the loader together with the parcel container, the height of the parcel is measured.
- According to the height of the measured parcel, and according to the positions of other parcels as well as the vacant space on the shelves, the most suitable place is calculated for the parcel to be loaded in order to make sure that the parcel to be loaded would take up as little space as possible.
- The boom transports the parcel that has been pulled onto the loader together with the parcel container, to the shelf according to the most suitable vacant place found previously.
- In order to complete the session, an option is displayed in the user interface to finish the session or to start a new one, either for loading parcels or for delivering parcels.
- Upon receiving the command from the courier to finish the session, the door moves to its fully closed position.
- If the command by the courier, to finish the session or to start a new session, is not entered during the allocated time (within 10 seconds, for example), the door moves to its fully closed position and the user interface is deactivated.

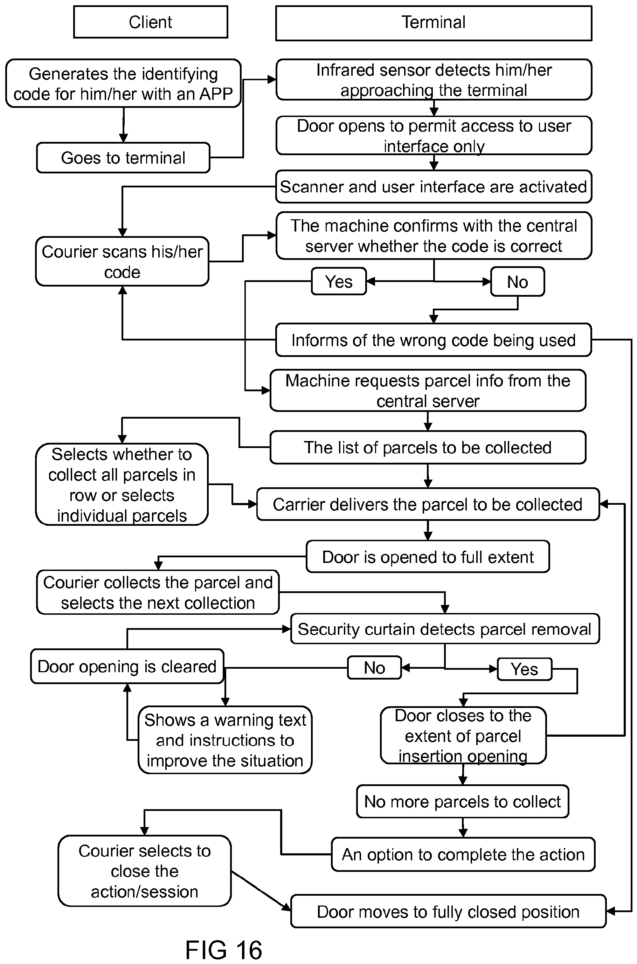

In the alternative embodiment of the method in accordance with the present invention, the process of delivering parcels to a recipient who is not a courier is shown in the flow-chart fig 16 and comprises following stages.
- The person receiving a parcel generates themselves an identifiable code via an application.
- Motion sensor 15 identifies a parcel recipient approaching the parcel terminal which initiates the session.
- Parcel terminal console door 12 is opened to reveal the user interface 13.
- The scanner 14 and user interface 13 are activated.
- The person receiving a parcel scans the previously generated code and the system identifies the person by forwarding the scanned code to the server.
- If the code is wrong, announcement is made about using a wrong code and scanning is carried out again and/or the door closes completely and the session is over and the user interface as well as the scanner are deactivated.
- If the code is correct, a command is sent for delivering a parcel or parcels and the boom with the loader bring the parcel to be delivered, or parcels to be delivered, one after another, according to the list, to the console.
- Upon delivering the first parcel, the door opens fully.
- The user takes out the parcel brought to the console and
- The system checks if the parcel has been taken out and the door opening is clear.
- The check of the door opening to be clear is performed with safety curtains. In the case when the system recognizes that the door opening is not clear, a warning and instructions to improve the situation and clear the door opening are displayed in the user interface, after which the door opening is cleared.
- When the door opening is clear or cleared, the session is finished and the door moves to its fully closed position.

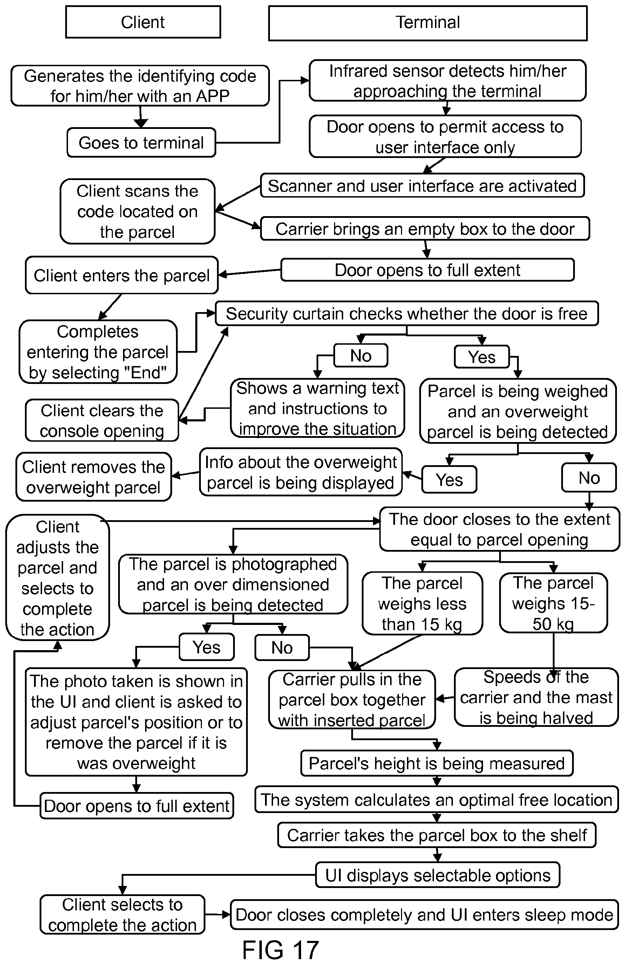

In the alternative embodiment of the method in accordance with the present invention, the process of loading parcels by a sender who is not a courier is shown in the flow-chart fig 17 and comprises following stages:
- The sender generates themselves an identifiable code via an application.
- Motion sensor 15 identifies the sender approaching the parcel terminal which initiates the session.
- Parcel terminal console door 12 is opened to reveal the user interface 13.
- The scanner 14 and user interface 13 are activated
- The sender scans the code on the parcel.
- The main boom and loader bring an empty parcel container into the console.
- The door opens fully.
- The parcel is loaded and the command to end the transaction is selected.
- The system checks if the door opening is clear.
- Safety curtains check if the door opening is clear. In the case when the system recognizes that the door opening is not clear, a warning and instructions to improve the situation and clear the door opening are displayed in the user interface, after which the door opening is cleared.
- When the door opening is clear or cleared, the parcel is weighed and checked if the weight of the parcel remains within the allowed limit. In the case when an oversized parcel is identified, information about the oversized parcel to be removed is displayed in the user interface, the parcel is then removed and a new command to finish the transaction, to load a new parcel, to retrieve a new parcel or to end the session is entered.
- If the parcel is not oversized, the door closes to cover the parcel delivery slot.
- Measuring the parcel is carried out and checking is performed whether the parcel fits within the allowed size limits and has properly been placed in the parcel container.
- Picture is taken of the parcel to measure it and check its position in the parcel container.
- If it is established that the parcel is oversized, the picture taken and instructions to adjust the position of the parcel are displayed in the user interface, or, if the parcel is oversized, the instructions to remove the parcel from the parcel container. In such a case the door will open fully to allow adjustment or removal of the parcel. After the parcel has been adjusted or taken out, and the command to end the transaction has been entered, the door closes to cover the parcel delivery slot. And again, photographing is performed to check for the position of an oversized or inappropriately placed parcel.
- If, upon weighing the parcel, it is established that the parcel meets the weight limits, the parcel container with the parcel placed into it is pulled onto the loader.
- If, upon weighing the parcel, it is established that the parcel is lighter (for example, up to 15 kg) than the set limits, the parcel terminal continues in its normal working mode.
- If, upon weighing the parcel, it is established that the parcel is heavier (e.g., between 15-50 kg) than the set limits, then the movement speed of the loader and main boom is slowed down according to the weight of the parcel in order to avoid upsetting the parcel during the movement of the loader and boom, or to keep it from falling out of the parcel container.
- Upon pulling the parcel onto the loader together with the parcel container, the height of the parcel is measured.
- According to the height of the measured parcel, and according to the positions of other parcels as well as the vacant space on the shelves, the most suitable place is calculated for the parcel to be loaded in order to make sure that the parcel to be loaded would take up as little space as possible.
- The boom transports the parcel that has been pulled onto the loader together with the parcel container, to the shelf according to the most suitable vacant place found previously.
- In order to complete the session, an option is displayed in the user interface to finish the session or to start a new one, either for loading parcels or for delivering parcels.
- Upon receiving the command from the user to finish the session, the door moves to its fully closed position.
- If the command by the user, to finish the session or to start a new session, is not entered during the allocated time (within 10 seconds, for example), the door moves to its fully closed position and the user interface is deactivated.

## Claims

1. A parcel terminal which comprises a body comprising a base frame (1), a roof frame (2) and side panels (3); a main boom (5) comprising a loader (6), a set-up of multitude of shelves (7); a console (10) comprising a door opening/slot (11); a door (12); a user interface (13); and a scanner (14), wherein
- the shelves (7) comprise rails (8) having removable parcel containers (9) added into the rails (8) of the shelves (7), and
- the console (10) comprises a parcel container base (9.1) with attached weighing elements (18) added to the bottom part of the console (10), optical measuring light curtains (17), and at least one measuring device (19),
**characterized in that**
- the body of the parcel terminal is tower-shaped,
- the main boom (5) is fastened to a rotating base (4) that has been added to the base frame (1),
- the set-up of multitude of shelves (7) is circular and arranged around the rotating base (4),
- the console (10) comprises a motion sensor (15) attached to the console (10) outside wall,
- the console (10) comprises a parcel position photographing camera (16) added into the upper part of the console (10),
- the optical measuring light curtains (17) are added to the rear part of the console (10),
- the at least one measuring device (19) is attached into at least one corner of the console (10),
- the console (10) comprises reflective markers (20) added to the inside walls of the console (10),
- and wherein the parcel terminal is configured to weigh a received parcel (21) by means of the weighing elements (18) and to determine the movement speed for the main boom (5) and the loader (6) based on the weight of the parcel (21) so that a slower speed is determined when the weight of the parcel (21) exceeds a predetermined weight.

2. The parcel terminal according to claim 1, wherein the measuring device is a measuring camera (19.1), at least two measuring sensors (19.2) or mirrors (19.3).

3. The parcel terminal according to claim 1, wherein the parcel terminal is connected to a server to process data, generate user and parcel codes and for identifying users over a web or smart device applications as well as sending the respective data to the parcel terminal.

4. A method for optimizing parcel capacity in a parcel terminal which comprises a tower-shaped body comprising a base frame (1), a roof frame (2) and side panels (3); a main boom (5) comprising a loader (6), fastened to a rotating base (4) that has been added to the base frame (1); a circular set-up of shelves (7) around the rotating base (4); a console (10) with a door opening/slot (11); a door (12); a user interface (13); and a scanner (14), wherein the console (10) comprises a parcel container base (9.1) with attached weighing elements (18) added to the bottom part of the console (10) and wherein the method comprises following steps
- generating a unique user code and a parcel code for single one-off usage;
- initiating a session to load and/or deliver a postal object;
- opening the console door (12) to reveal the user interface (13);
- activating the scanner (14) and the user interface (13);
- identifying the presence of the user upon scanning the user code by the user, and sending the scanned user code to a server;
- validating the scanned user code;
- forwarding a command to load a parcel (21) or to deliver a parcel (21);
- opening the console door (12) to its fully open position;
- performing parcel loading or delivery transactions;
- ending parcel loading or delivery session and moving the door (12) to its fully closed position and deactivating the scanner (14) and the user interface (13),
- wherein a received parcel (21) is weighed by means of the weighing elements (18) and movement speed for the main boom (5) and the loader (6) is determined based on the weight of the parcel (21) so that a slower speed is determined when the weight of the parcel (21) exceeds a predetermined weight.

5. The method according to claim 4, wherein identifying the presence of a user at the parcel terminal within the coverage area of the motion sensor (15.1) is recognized by the motion sensor (15) in order to initiate a session.

6. The method according to claim 4, wherein as parts of the parcel loading transaction, the availability and location of a vacant space in the parcel terminal is checked, the parcel is photographed, measured, the position of the parcel (21) is identified in the parcel container (9), the parcel (21) is weighed and according to the obtained data, the most optimal place is found for the parcel (21) in the rails (8) of the shelves (7).

7. The method according to claim 4, wherein the unique user code is generated over a smart device or web application and sent to the parcel terminal user interface (13).

8. The method according to claim 4, wherein upon sending/loading a parcel (21), the parcel information has the user code added to it and forwarded to the server.

## Patentansprüche

1. Paketterminal, das ein Gehäuse umfasst, umfassend einen Grundrahmen (1), einen Dachrahmen (2) und Seitenplatten (3); einen Hauptausleger (5), umfassend einen Lader (6), eine Anordnung einer Vielzahl von Regalen (7); einen Lagerblock (10), umfassend eine Türöffnung/-aussparung (11); eine Tür (12); eine Benutzeroberfläche (13) und einen Scanner (14), wobei
- die Regale (7) Schienen (8) mit herausnehmbaren Paketcontainern (9) umfassen, die in die Schienen (8) der Regale (7) angefügt werden, und
- der Lagerblock (10) eine Paketcontainerbasis (9.1) mit angebrachten Wägeelementen (18), die an den Bodenteil des Lagerblocks (10) angefügt werden, optische Messlichtvorhänge (17) und mindestens eine Messvorrichtung (19) umfasst,
**dadurch gekennzeichnet, dass**
- das Gehäuse des Paketterminals turmförmig ist,
- der Hauptausleger (5) an einer sich drehenden Basis (4) befestigt ist, die an den Grundrahmen (1) angefügt wurde,
- die Anordnung einer Vielzahl von Regalen (7) kreisförmig ist und um die sich drehende Basis (4) angeordnet ist,
- der Lagerblock (10) einen Bewegungssensor (15) umfasst, der an die Außenwand des Lagerblocks (10) angebracht ist,
- der Lagerblock (10) eine Paketpositionsfotokamera (16) umfasst, die in den oberen Teil des Lagerblocks (10) angefügt ist,
- die optischen Messlichtvorhänge (17) an den hinteren Teil des Lagerblocks (10) angefügt sind,
- die mindestens eine Messvorrichtung (19) in mindestens eine Ecke des Lagerblocks (10) angefügt ist,
- der Lagerblock (10) reflektierende Markierungen (20) umfasst, die an die Innenwände des Lagerblocks (10) angefügt sind,
- und wobei das Paketterminal dazu konfiguriert ist, ein empfangenes Paket (21) mittels der Wägeelemente (18) zu wiegen und die Bewegungsgeschwindigkeit für den Hauptausleger (5) und den Lader (6) auf der Basis des Gewichts des Pakets (21) zu bestimmen, so dass eine langsamere Geschwindigkeit bestimmt wird, wenn das Gewicht des Pakets (21) ein vorherbestimmtes Gewicht überschreitet.

2. Paketterminal nach Anspruch 1, wobei es sich bei der Messvorrichtung um eine Messkamera (19.1), mindestens zwei Messsensoren (19.2) oder Spiegel (19.3) handelt.

3. Paketterminal nach Anspruch 1, wobei das Paketterminal mit einem Server zum Verarbeiten von Daten, Erzeugen von Benutzer- und Paketcodes und zum Identifizieren von Benutzern über eine Web- oder Smart-Geräteanwendung sowie Senden der jeweiligen Daten an das Paketterminal verbunden ist.

4. Verfahren zur Optimierung der Paketkapazität in einem Paketterminal, das ein turmförmiges Gehäuse umfasst, umfassend einen Grundrahmen (1), einen Dachrahmen (2) und Seitenplatten (3); einen Hauptausleger (5), umfassend einen Lader (6), der an eine sich drehende Basis (4) befestigt ist, die an den Grundrahmen (1) angefügt wurde; eine kreisförmige Anordnung von Regalen (7) um die sich drehende Basis (4); einen Lagerblock (10) mit einer Türöffnung/-aussparung (11); eine Tür (12); eine Benutzeroberfläche (13) und einen Scanner (14), wobei der Lagerblock (10) eine Paketcontainerbasis (9.1) mit angebrachten Wägeelementen (18) umfasst, die an den Bodenteil des Lagerblocks (10) angefügt werden, und wobei das Verfahren die folgenden Schritte umfasst:
- Erzeugen eines einzigartigen Benutzercodes und eines Paketcodes für einen einzigen, einmaligen Gebrauch;
- Initiieren der Sitzung zum Laden und/oder Liefern eines Postgegenstands;
- Öffnen der Lagerblocktür (12) zum Freilegen der Benutzeroberfläche (13);
- Aktivieren des Scanners (14) und der Benutzeroberfläche (13);
- Identifizieren der Gegenwart des Benutzers bei Scannen des Benutzercodes durch den Benutzer und Senden des gescannten Benutzercodes an den Server;
- Validieren des gescannten Benutzercodes;
- Weiterleiten eines Befehls zum Laden eines Pakets (21) oder zum Liefern eines Pakets (21);
- Öffnen der Lagerblocktür (12) in ihre vollständig geöffnete Position;
- Durchführen der Paketlade- oder -liefervorgänge;
- Beenden der Paketlade- oder -liefersitzung und Bewegen der Tür (12) in ihre vollständig geschlossene Position und Deaktivieren des Scanners (14) und der Benutzeroberfläche (13),
- wobei ein empfangenes Paket (21) mittels der Wägeelemente (18) gewogen wird und die Bewegungsgeschwindigkeit für den Hauptausleger (5) und den Lader (6) auf der Basis des Gewichts des Pakets (21) bestimmt wird, so dass eine langsamere Geschwindigkeit bestimmt wird, wenn das Gewicht des Pakets (21) ein vorherbestimmtes Gewicht überschreitet.

5. Verfahren nach Anspruch 4, wobei das Identifizieren der Gegenwart eines Benutzers am Paketterminal innerhalb des Erfassungsbereichs des Bewegungssensors (15.1) durch den Bewegungssensor (15) erkannt wird, um eine Sitzung zu initiieren.

6. Verfahren nach Anspruch 4, wobei als Teile des Paketladevorgangs die Verfügbarkeit und die Stelle eines freien Platzes in dem Paketterminal geprüft werden, das Paket fotografiert und gemessen wird, die Position des Pakets (21) in dem Paketcontainer (9) identifiziert wird, das Paket (21) gewogen wird und der optimalste Platz für das Paket (21) in den Schienen (8) der Regale (7) gemäß den erhaltenen Daten gefunden wird.

7. Verfahren nach Anspruch 4, wobei der einzigartige Benutzercode über eine Smart-Geräte- oder Web-Anwendung erzeugt und an die Benutzeroberfläche (13) des Paketterminals gesendet wird.

8. Verfahren nach Anspruch 4, wobei bei Senden/Laden eines Pakets (21) der Benutzercode den Paketinformationen hinzugefügt wird und an den Server weitergeleitet wird.

## Revendications

1. Terminal de colis qui comprend un corps comprenant un châssis de base (1), un châssis de toit (2) et des panneaux latéraux (3); une flèche principale (5) comprenant un chargeur (6), une configuration de multitudes d'étagères (7) ; une console (10) comprenant une ouverture/fente de porte (11) ; une porte (12) ; une interface d'utilisateur (13) ; et un scanner (14), dans lequel
- les étagères (7) comprennent des rails (8) ayant des conteneurs de colis amovibles (9) ajoutés dans les rails (8) des étagères (7), et
- la console (10) comprend une base de conteneur de colis (9.1) avec des éléments de pesée (18) rapportés ajoutés à la partie inférieure de la console (10), des barrières optiques de mesure (17), et au moins un dispositif de mesure (19),
**caractérisé en ce que**
- le corps du terminal de colis est en forme de tour,
- la flèche principale (5) est fixée à une base rotative (4) qui a été ajoutée au châssis de base (1),
- la configuration de la multitude d'étagères (7) est circulaire et disposée autour de la base rotative (4),
- la console (10) comprend un capteur de mouvement (15) fixé à la paroi extérieure de la console (10),
- la console (10) comprend une caméra de photographie de position de colis (16) ajoutée dans la partie supérieure de la console (10),
- les barrières optiques de mesure (17) sont ajoutées à la partie arrière de la console (10),
- le au moins un dispositif de mesure (19) est fixé dans au moins un coin de la console (10),
- la console (10) comprend des marqueurs réfléchissants (20) ajoutés aux parois intérieures de la console (10),
- et dans lequel le terminal de colis est configuré pour peser un colis reçu (21) au moyen des éléments de pesée (18) et pour déterminer la vitesse de déplacement pour la flèche principale (5) et le chargeur (6) en fonction du poids du colis (21) de sorte qu'une vitesse plus lente soit déterminée lorsque le poids du colis (21) dépasse un poids prédéterminé.

2. Terminal de colis selon la revendication 1, dans lequel le dispositif de mesure est une caméra de mesure (19.1), au moins deux capteurs de mesure (19.2) ou des miroirs (19.3).

3. Terminal de colis selon la revendication 1, dans lequel le terminal de colis est connecté à un serveur pour traiter des données, générer des codes d'utilisateur et de colis et pour identifier des utilisateurs via des applications Web ou pour appareils intelligents ainsi que pour envoyer les données respectives au terminal de colis.

4. Procédé d'optimisation de la capacité de colis dans un terminal de colis qui comprend un corps en forme de tour comprenant un châssis de base (1), un châssis de toit (2) et des panneaux latéraux (3); une flèche principale (5) comprenant un chargeur (6), fixée à une base rotative (4) qui a été ajouté au châssis de base (1); une configuration circulaire d'étagères (7) autour de la base rotative (4) ; une console (10) avec une ouverture/fente de porte (11); une porte (12) ; une interface d'utilisateur (13) ; et un scanner (14), dans lequel la console (10) comprend une base de conteneur de colis (9.1) avec des éléments de pesée rapportés (18) ajoutés à la partie inférieure de la console (10) et dans lequel le procédé comprend les étapes suivantes consistant à :
- générer un code d'utilisateur unique et un code colis à usage unique ;
- lancer une session pour charger et/ou livrer un objet postal ;
- ouvrir la porte de la console (12) pour révéler l'interface d'utilisateur (13);
- activer le scanner (14) et l'interface d'utilisateur (13) ;
- identifier la présence de l'utilisateur lors du balayage du code d'utilisateur par l'utilisateur, et envoyer le code d'utilisateur scanné au serveur;
- valider le code d'utilisateur scanné ;
- transmettre une commande de chargement d'un colis (21) ou de livraison d'un colis (21) ;
- ouvrir la porte de la console (12) dans sa position complètement ouverte,
- effectuer des transactions de chargement ou de livraison de colis ;
- terminer la session de chargement ou de livraison de colis et déplacer la porte (12) vers sa position complètement fermée et désactiver le scanner (14) et l'interface d'utilisateur (13),
- dans lequel un colis reçu (21) est pesé au moyen des éléments de pesée (18) et la vitesse de mouvement pour la flèche principale (5) et le chargeur (6) est déterminée sur la base du poids du colis (21) de sorte qu'une vitesse plus lente soit déterminée lorsque le poids du colis (21) dépasse un poids prédéterminé.

5. Procédé selon la revendication 4, dans lequel l'identification de la présence d'un utilisateur au niveau du terminal de colis dans la zone de couverture du capteur de mouvement (15.1) est reconnue par le capteur de mouvement (15) afin de lancer une session.

6. Procédé selon la revendication 4, dans lequel dans le cadre de la transaction de chargement de colis, la disponibilité et l'emplacement d'un espace vacant dans le terminal de colis sont vérifiés, le colis est photographié, mesuré, la position du colis (21) est identifiée dans le conteneur de colis (9), le colis (21) est pesé et selon les données obtenues, la place la plus optimale est trouvée pour le colis (21) dans les rails (8) des étagères (7).

7. Procédé selon la revendication 4, dans lequel le code d'utilisateur unique est généré sur un dispositif intelligent ou une application Web et envoyé à l'interface d'utilisateur (13) du terminal de colis.

8. Procédé selon la revendication 4, dans lequel lors de l'envoi/chargement d'un colis (21), le code d'utilisateur est ajouté aux informations de colis et transmis au serveur.
